# EUROPEAN PATENT SPECIFICATION

(11) **EP 2 997 720 B1**
(45) Date of publication and mention of the grant of the patent: **06.11.2019**
(21) Application number: 13884039.2
(22) Date of filing: 07.05.2013
(51) Int. Cl.: G10K 11/04, H04M 1/03, H04R 1/28, H04R 3/02

(54) **REDUCED ACOUSTIC COUPLING**
REDUZIERTE AKUSTISCHE KOPPLUNG
COUPLAGE ACOUSTIQUE REDUIT

(43) Date of publication of application: 23.03.2016
(73) Proprietor: Nokia Technologies Oy, 02610 Espoo (FI)
(72) Inventor: SHI, Shengrong, Beijing 100176 (CN); YANG, Yuanjia, Beijing 100176 (CN)
(74) Representative: Browne, Robin Forsythe
(86) International application number: PCT/CN2013/075246
(87) International publication number: WO 2014/179932

(56) References cited:
- WO-A1-2012/124348
- JP-A- 2008 113 082
- US-A- 2 190 467
- US-A- 5 369 701
- US-A- 5 778 085
- US-A- 5 883 966

## Description

### Field

The present application relates to reducing acoustical coupling in apparatus, and reduced acoustically coupled apparatus. The application further relates to, but is not limited to, reducing acoustical coupling in portable or mobile apparatus, and reduced acoustically coupled portable or mobile apparatus.

### Background

Acoustical coupling can refer to sound energy generated from a speaker or receiver being received by a microphone in a given system.

In mobile apparatus (such as mobile phones) acoustic design, acoustical coupling is unavoidable and a difficult problem to solve due to the coupling path being usually shorter and the microphone being omni-directional. Some cases, due to Industry Design (ID) design processes the coupling path is as short as 2∼3cm. Thus the energy coupled between the speaker and microphone in such designs will be very strong.

The strong acoustical coupling between the speaker and microphone can cause significant echoes. Echoes in mobile communication systems where the user can hear their own voice with delay can be generated when their voice is replayed by the speaker or receiver at the far end, picked by the microphone in the far end and sent back to the speaker at the users end.

The typical management of echoes has been by applying digital signal processing (DSP) algorithms. However, there are limitations to the capability of DSP algorithms to eliminate echoes. They typically require significant processing power and therefore additional processing capacity and therefore power to implement.

This is particularly significant in mobile apparatus in the low cost categories. For example low cost mobile phones are usually based on a smaller size display and low power (cheap) processing engine. This creates a small phone size with strong acoustical coupling and due to the low power (cheap) processing engine, the audio echo cancellation algorithm implemented will be simple which is significantly prone to echo generation.

WO2012/124348 discusses a mobile terminal device that: suppresses the generation of echoes and howling that cause a deterioration in call quality; and achieves good call performance. The mobile terminal device comprises a rear surface casing and a battery cover that covers the entire rear surface of the rear surface casing. Sound holes for a microphone and speaker sound holes for a speaker are arranged on the same rear surface of the rear surface casing. The rear surface casing comprises a concave groove section, at least on the speaker side and around the sound holes for the microphone. The battery cover comprises a convex protruding section that fits into the groove section.

US5883966 discusses a thin foldable telephone or similar portable telephone where a speaker is mounted on an exclusive speaker casing mounted on the body casing of the telephone. The speaker casing is automatically protruded from the body casing when the telephone is used, or retracted into the body casing when the telephone is not used.

US2190467 discloses chambers within the handle of the handset configured to reduce the acoustic coupling between speaker and microphone.

### Summary of the Application

Aspects of this application thus provide a mobile apparatus design method and apparatus having undergone such a design process with reduced acoustic coupling and therefore reduced echo generation.

There is provided an apparatus according to claim 1.

The at least one location may be associated with the apparatus.

The at least one location may be on the apparatus.

The at least one location may be within the apparatus.

A computer program product stored on a medium may cause an apparatus to perform the method as described herein.

An electronic device may comprise apparatus as described herein.

Embodiments of the present application aim to address problems associated with the state of the art.

### Summary of the Figures

For better understanding of the present application, reference will now be made by way of example to the accompanying drawings in which:
Figure 1 shows a schematic view of an apparatus suitable for implementing embodiments;
Figure 2 shows schematically an isometric view of an example mobile apparatus suitable for implementing some embodiments;
Figure 3 shows schematically sound pressure level simulations of a range of frequencies on the mobile apparatus as shown in Figure 2;
Figure 4 shows schematically a test system for testing directly the acoustic coupling for the mobile apparatus as shown in Figure 2;
Figure 5 shows an example acoustic coupling curve generated for the mobile apparatus as shown in Figure 2;
Figure 6 shows a flow diagram of the design processes according to some embodiments;
Figure 7 shows schematically an isometric view of an example mobile apparatus comprising resonators located at pole positions according to some embodiments;
Figure 8 shows schematically a sectioned view an example mobile apparatus comprising resonators located at pole positions according to some embodiments;
Figure 9 shows schematically sound pressure level simulations of a range of frequencies on the mobile apparatus as shown in Figure 7 and 8;
Figure 10 shows an example free field acoustic coupling curve generated for the mobile apparatus as shown in Figures 7 and 8 compared with the mobile apparatus as shown in Figure 2;
Figure 11 shows an example head and torso simulation acoustic coupling curve generated for the mobile apparatus as shown in Figures 7 and 8 compared with the mobile apparatus as shown in Figure 2;
Figure 12 shows an example flat surface acoustic coupling curve generated for the mobile apparatus as shown in Figures 7 and 8 compared with the mobile apparatus as shown in Figure 2;
Figure 13 shows an example microphone response curve generated for the mobile apparatus as shown in Figures 7 and 8 compared with the mobile apparatus as shown in Figure 2;
Figure 14 shows an example speaker response curve generated for the mobile apparatus as shown in Figures 7 and 8 compared with the mobile apparatus as shown in Figure 2;
Figure 15 shows an example terminal coupling curve generated for the mobile apparatus as shown in Figures 7 and 8 compared with the mobile apparatus as shown in Figure 2; and
Figures 16A and 16B show example apparatus echo and double talk performance generated for the mobile apparatus as shown in Figures 7 and 8 compared with the mobile apparatus as shown in Figure 2.

### Embodiments of the Application

The following describes in further detail suitable design methods for reduced acoustically coupled apparatus and furthermore reduced acoustically coupled apparatus.

This concept as described herein by examples provides a design methodology to create apparatus with a reduced raw acoustical coupling between speaker and microphone. Similarly the concept as described herein is reflected in apparatus with reduce raw acoustical coupling between speaker and microphone.

It is understood that each acoustic system can have an intrinsic mode of acoustical coupling, which follows the sound diffraction law. The sound pressure level (SPL) distribution of the acoustical system are determined or fixed by the boundary conditions, such as the size of the apparatus, shape of the apparatus, material structure of the apparatus and the location of microphone and speaker on the apparatus as well as other design parameters.

In some embodiments of the concept simulation tools can be used to calculate the SPL distribution of a given apparatus system. On this simulation there are critical boundary condition points which can affect significant SPL distribution changes of the system. For example the simulation can determine maximum SPL points or secondary maximum SPL points. The concept as implemented by the following examples is that by changing the maximum SPL point the boundary condition can be significantly changed and the intrinsic mode will be also changed. Accordingly, the whole SPL distribution can be changed significantly. As a result, the acoustic coupling is significantly changes and thus by changing the maximum SPL point there is provided a way to reduce the acoustical coupling purely acoustically.

In some embodiments changing the maximum SPL point can be implemented by adding a Helmholtz resonator on the surface of the apparatus at the maximum SPL point. The surface impedance can thus be changed from infinite to zero, the maximum SPL can be absorbed and impact the whole diffusion pathway from speaker to microphone.

It would be understood that in some embodiments the maximum SPL points can be affected by implemented components other than a Helmholtz resonator. For example implementing an acoustic absorbing material at the maximum SPL point can also be implemented.

In other words the concept behind the embodiments described herein is to reduce acoustical coupling by changing the coupling path with designed acoustical structures between the speaker and microphone.

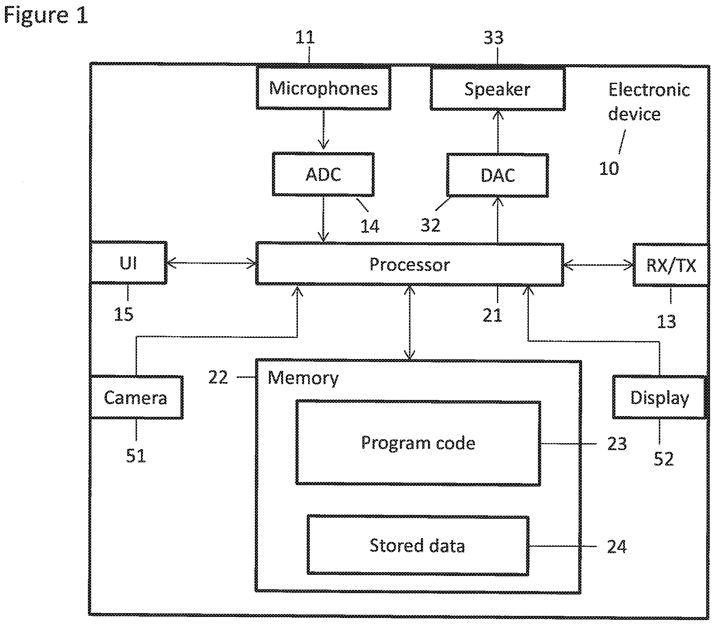

In this regard reference is first made to Figure 1 which shows a schematic block diagram of an exemplary apparatus or electronic device 10, which may employ embodiments as described herein.

The apparatus 10 can for example be a mobile terminal or user equipment of a wireless communication system. In some embodiments the apparatus can be an audio player or audio recorder, such as an MP3 player, a media recorder/player (also known as an MP4 player), or any suitable portable device requiring user interface inputs.

In some embodiments the apparatus can be part of a personal computer system an electronic document reader, a tablet computer, or a laptop.

The apparatus 10 can in some embodiments comprise an audio subsystem. The audio subsystem for example can include in some embodiments a microphone or array of microphones 11 for audio signal capture. In some embodiments the microphone (or at least one of the array of microphones) can be a solid state microphone, in other words capable of capturing acoustic signals and outputting a suitable digital format audio signal. In some other embodiments the microphone or array of microphones 11 can comprise any suitable microphone or audio capture means, for example a condenser microphone, capacitor microphone, electrostatic microphone, electret condenser microphone, dynamic microphone, ribbon microphone, carbon microphone, piezoelectric microphone, or micro-electrical-mechanical system (MEMS) microphone. The microphone 11 or array of microphones can in some embodiments output the generated audio signal to an analogue-to-digital converter (ADC) 14.

In some embodiments the apparatus and audio subsystem includes an analogue-to-digital converter (ADC) 14 configured to receive the analogue captured audio signal from the microphones and output the audio captured signal in a suitable digital form. The analogue-to-digital converter 14 can be any suitable analogue-to-digital conversion or processing means.

In some embodiments the apparatus 10 and audio subsystem further includes a digital-to-analogue converter 32 for converting digital audio signals from a processor 21 to a suitable analogue format. The digital-to-analogue converter (DAC) or signal processing means 32 can in some embodiments be any suitable DAC technology.

Furthermore the audio subsystem can include in some embodiments a speaker 33. The speaker 33 can in some embodiments receive the output from the digital-to-analogue converter 32 and present the analogue audio signal to the user. In some embodiments the speaker 33 can be representative of a headset, for example a set of headphones, or cordless headphones.

In some embodiments the apparatus audio-video subsystem comprises a camera 51 or image capturing means configured to supply to the processor 21 image data. In some embodiments the camera can be configured to supply multiple images over time to provide a video stream.

In some embodiments the apparatus audio-video subsystem comprises a display 52. The display or image display means can be configured to output visual images which can be viewed by the user of the apparatus. In some embodiments the display can be a touch screen display suitable for supplying input data to the apparatus. The display can be any suitable display technology, for example the display can be implemented by a flat panel comprising cells of LCD, LED, OLED, or 'plasma' display implementations.

Although the apparatus 10 is shown having both audio/video capture and audio/video presentation components, it would be understood that in some embodiments the apparatus 10 can comprise only the audio capture and audio presentation parts of the audio subsystem such that in some embodiments of the apparatus the microphone (for audio capture) or the speaker (for audio presentation) are present.

In some embodiments the apparatus 10 comprises a processor 21. The processor 21 is coupled to the audio subsystem and specifically in some examples the analogue-to-digital converter 14 for receiving digital signals representing audio signals from the microphone 11, and the digital-to-analogue converter (DAC) 12 configured to output processed digital audio signals, the camera 51 for receiving digital signals representing video signals, and the display 52 configured to output processed digital video signals from the processor 21.

The processor 21 can be configured to execute various program codes.

In some embodiments the apparatus further comprises a memory 22. In some embodiments the processor 21 is coupled to memory 22. The memory 22 can be any suitable storage means. In some embodiments the memory 22 comprises a program code section 23 for storing program codes implementable upon the processor 21 such as those code routines described herein. Furthermore in some embodiments the memory 22 can further comprise a stored data section 24 for storing data. The implemented program code stored within the program code section 23, and the data stored within the stored data section 24 can be retrieved by the processor 21 whenever needed via a memory-processor coupling.

In some further embodiments the apparatus 10 can comprise a user interface 15. The user interface 15 can be coupled in some embodiments to the processor 21. In some embodiments the processor can control the operation of the user interface and receive inputs from the user interface 15. In some embodiments the user interface 15 can enable a user to input commands to the electronic device or apparatus 10, for example via a keypad, and/or to obtain information from the apparatus 10, for example via a display which is part of the user interface 15. The user interface 15 can in some embodiments comprise a touch screen or touch interface capable of both enabling information to be entered to the apparatus 10 and further displaying information to the user of the apparatus 10.

In some embodiments the apparatus further comprises a transceiver 13, the transceiver in such embodiments can be coupled to the processor and configured to enable a communication with other apparatus or electronic devices, for example via a wireless communications network. The transceiver 13 or any suitable transceiver or transmitter and/or receiver means can in some embodiments be configured to communicate with other electronic devices or apparatus via a wire or wired coupling.

The transceiver 13 can communicate with further devices by any suitable known communications protocol, for example in some embodiments the transceiver 13 or transceiver means can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA).

In some embodiments the transceiver is configured to transmit and/or receive the audio signals for processing according to some embodiments as discussed herein.

It is to be understood again that the structure of the apparatus 10 could be supplemented and varied in many ways.

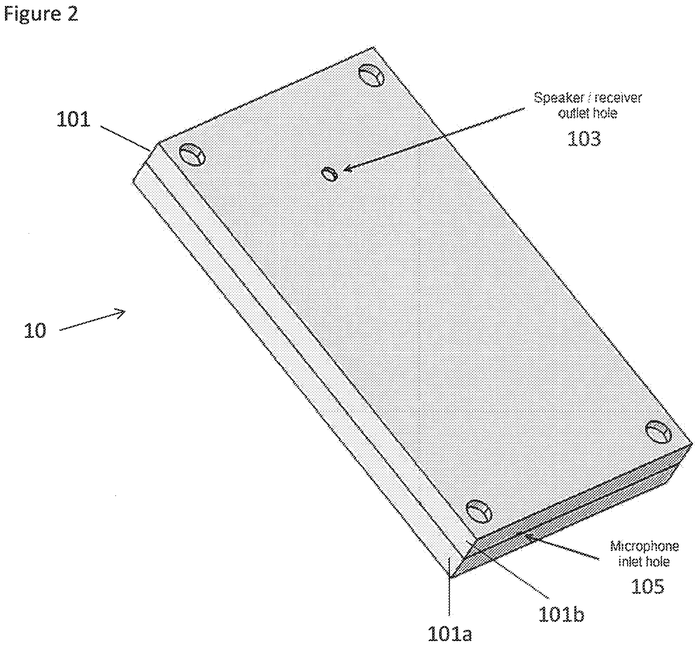

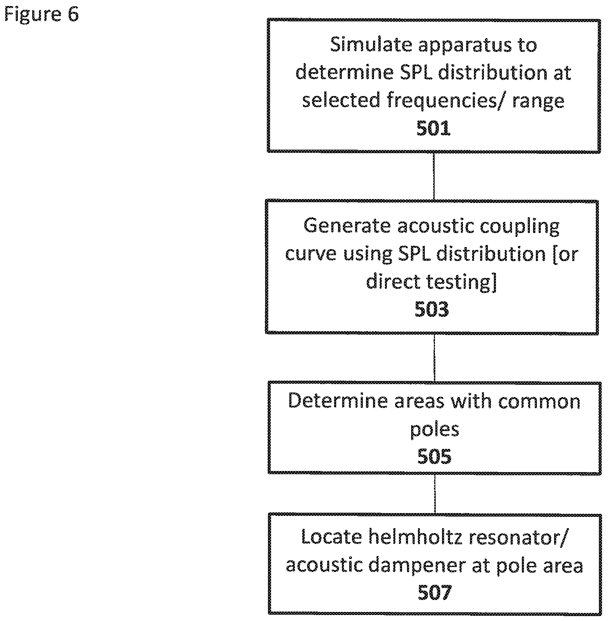

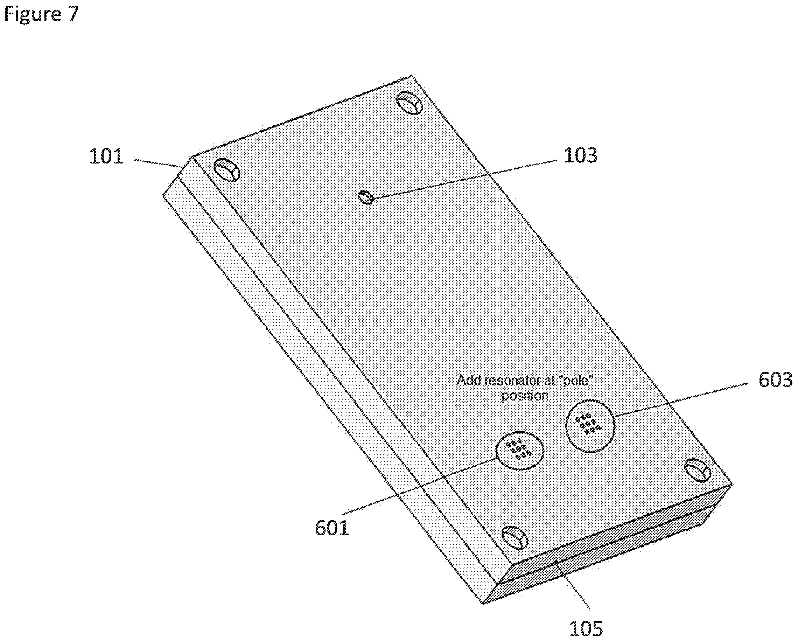

With respect to Figure 6 the method according to some embodiments is shown as a flow chart. The method as discussed in further detail herein is the application of a design method for reducing the acoustical coupling between a speaker and microphone in a system such as shown in Figure 2, the result of which is shown in Figure 7.

With respect to Figure 2 an isometric projection of an example mobile apparatus (an example subject of the design method presented herein) is shown. The apparatus 10 comprises a casing 101. The casing is shown herein as a two part (front part 101a and back part 101b) cuboid construction formed from a suitable material.

As can be seen in Figure 2 the casing 101 comprises a speaker/receiver outlet hole 103. The speaker/receiver output hole 103 is a hole or portal coupling the speaker 33 and speaker cavity to the environment surrounding the apparatus 10. The speaker cavity can be located between the speaker 33 and the speaker/receiver outlet hole 103 operating as a tuned cavity configured to tune the output acoustic waves in a suitable manner. The speaker/receiver outlet hole 103 typically is located on a first face of the casing 101, the first face being one of the large faces of the cuboid and towards the upper part of the apparatus (in other words biased towards one of the smaller faces) and approximately on the centreline between the two mid sized faces.

Although in the following examples a single speaker/receiver output hole 103 is shown in Figure 2 it would be understood that in some embodiments the apparatus comprises more than one speaker output hole, for example two separate output holes or ports can be provided to generate a stereo effect.

As shown in Figure 2 the casing 101 can further comprise a microphone inlet hole 105. The microphone input hole 105 is a hole or portal coupling the environment to a cavity within the apparatus within which is located the microphone or microphones 11. The microphone input hole 105 is shown on the apparatus 10 as being located on the at the bottom edge of the apparatus, in other words on the smallest face away from the speaker hole. In the following examples a single inlet hole is shown however it would be understood that in some embodiments there can be more than one microphone inlet hole coupled to more than one microphone. For example in some embodiments more than one microphone may be provided so that noise cancellation or environmental noise suppression can be performed.

It would be understood that the shape and configuration of the apparatus (in other words the positioning of the speaker/receiver output hole 103 and microphone input hole 105) as shown in Figure 2 is only an example of the relative positioning between a speaker output hole and microphone input hole and that in some embodiments the positioning can differ.

Furthermore it would be understood that in some embodiments where there is more than one speaker output hole 103 or more than one microphone input hole 105 that the following method can be performed such that the SPL patterns between each pair of output hole and inlet hole are analysed and suitable pole nodes defined. In some embodiments the system as a whole can be analysed and the pole nodes determined for the at least one microphone inlet hole and the at least one speaker outlet hole.

In some embodiments the intrinsic mode of acoustical coupling of the system is modelled. The intrinsic mode of acoustical coupling follows the sound diffusion law. In some embodiments the sound pressure level (SPL) distribution of the apparatus can be simulated by boundary element method (BEM) simulating the apparatus configuration. In some embodiments the simulation can be performed using a package known as LMS virtual.lab. In such a manner a sound pressure level distribution for a range of frequencies can be calculated. It would be understood that in some embodiments any suitable modelling approach to determine the sound pressure level distribution of the apparatus can be used. For example in some embodiments finite element modelling can be employed.

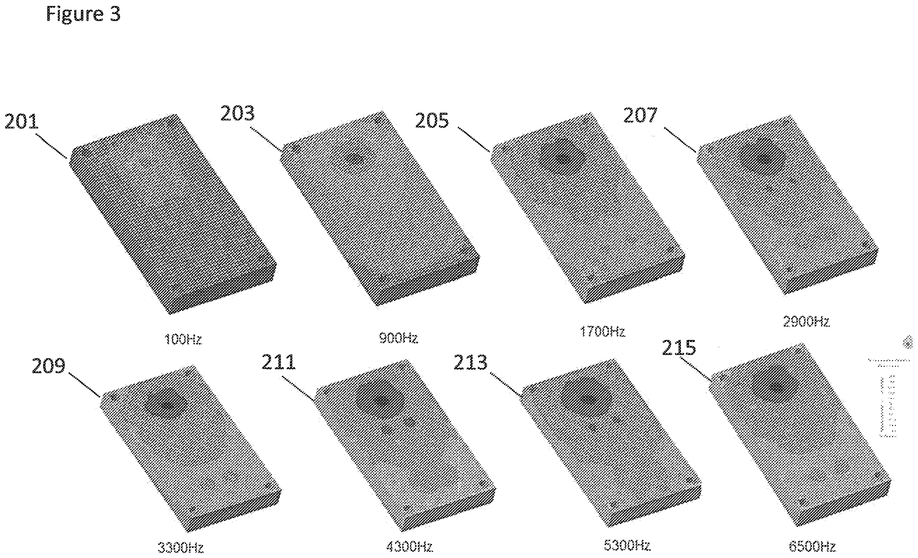

An example of the range of sound pressure level (SPL) distributions for the apparatus shown in Figure 2 can be shown in Figure 3 for 100Hz 201, 900Hz 203, 1700Hz 205, 2900Hz 207, 3300Hz 209, 4300Hz 211, 5300Hz 213, and 6500 Hz 215. In such a simulation of the acoustic source is the speaker's frequency response at a constant voltage which it can be swept from 100 Hz to approximately 10 kHz.

The simulation of the apparatus to determine the SPL distribution for selected frequencies (or over a range) is shown in Figure 6 by step 501.

The method then uses the SPL distributions to generate an acoustic coupling curve.

This can be done by linking all of the frequency points. For example the simulation result of coupling curve can be generated by picking one point, such as the point where the microphone is located, then determining or figure out the SPL data of different frequencies and generate a chart on SPL against frequency. However it would be understood that the coupling curve can be determined by using test results instead of simulation results.

In some embodiments the acoustic coupling curve can be generated directly by testing.

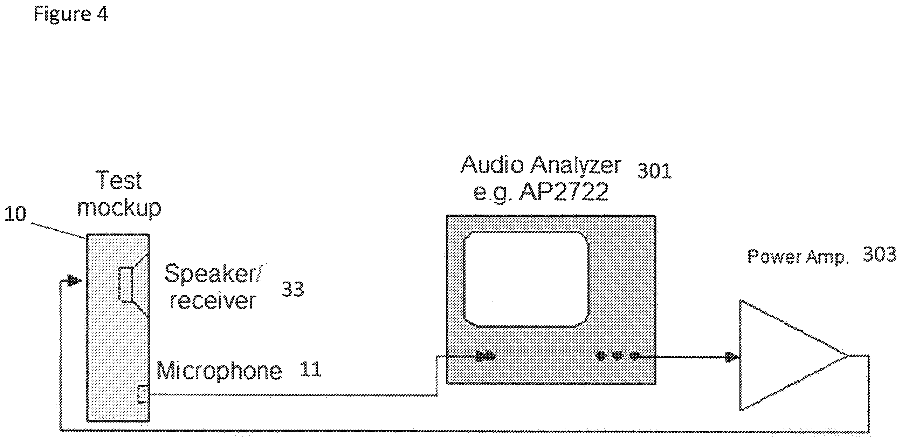

With respect to Figure 4 an example test configuration is shown wherein the apparatus 10 comprising the speaker/receiver 33 and microphones 11 is tested by coupling the microphone 11 to an audio analyser 301.

The test configuration further comprises an audio analyser 301. An example audio analyser is the AP2722. The audio analyser 301 is configured to analyse the output of the microphones 11. The audio analyser 301 can be configured to generate a test signal to be output by the speaker. The audio analyser 301 can further be configured to rate and output this test signal to a power amplifier 303 to be passed to the speaker 33 to be output by the apparatus (and thus to complete the system and be picked up by the microphone and analysed).

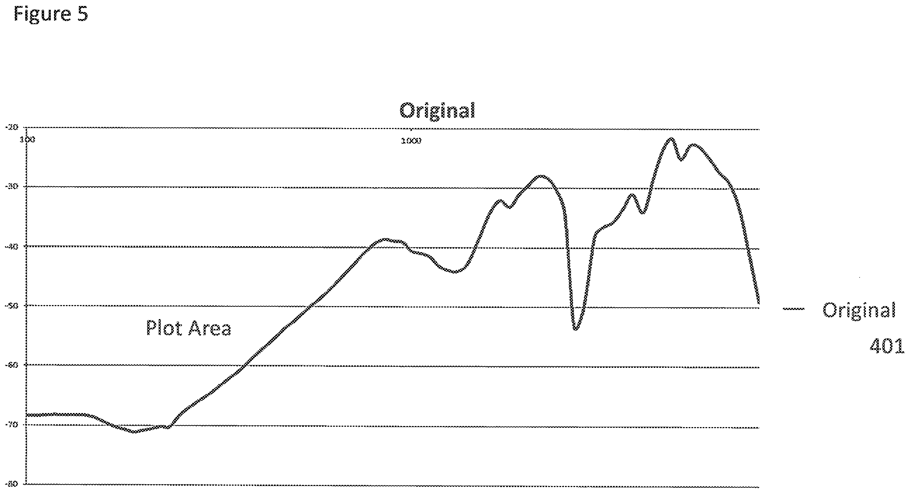

An example free space acoustical coupling curve is shown in Figure 5 where the trace 401 shows the degree of acoustical coupling between the speaker and microphone against signal frequency.

The operation of generating acoustical coupling curves (using the SPL distribution or by direct testing) is shown in Figure 6 by step 503.

The method then analyses the SPL distributions so that common areas that have nodes or poles within the range of SPL distribution are determined or found. The 'Pole' region or node is the location where sound reflection or diffraction is concentrated because of the boundary condition. However it would be understood that other locations within the range of SPL distributions can be found. In such embodiments the choice is the location which produces a significant SPL distribution change before and after the dampener (such as the Helmholtz resonator) is implemented. In some embodiments the placement of the dampening element can be a trial-and-error process based on determined possible areas which the simulation can predict how much acoustic coupling changes before and after the introduction of the dampening element.

The operation of determining areas with common nodes or poles (or the guided trial and error approach) is shown in Figure 6 by step 505.

The method then locates an element or device to dampen the acoustical coupling at the identified node or pole region. In some embodiments the method then locates an element or device to change the boundary condition or intrinsic mode of the apparatus to dampen the coupling between speaker and microphone. For example in some embodiments the element or device which can be employed to dampen or change the acoustical coupling is a Helmholtz resonator located at the node (or pole) location or more generally at the identified location. However it would be understood that in some embodiments an acoustically dampening material can be applied at this region to dampen the acoustical coupling.

For example Figure 7 shows an apparatus similar to that in Figure 2 but with the positioning of Helmholtz resonators at the node or pole positions as can be seen in Figure 3 (and in particular in the 1700 Hz 205, 2900 Hz 207, 3300 Hz 209, and 6500 Hz 215 plots). The Helmholtz resonators 601 and 603 located within the node or pole areas dampen the coupling between the speaker and microphone.

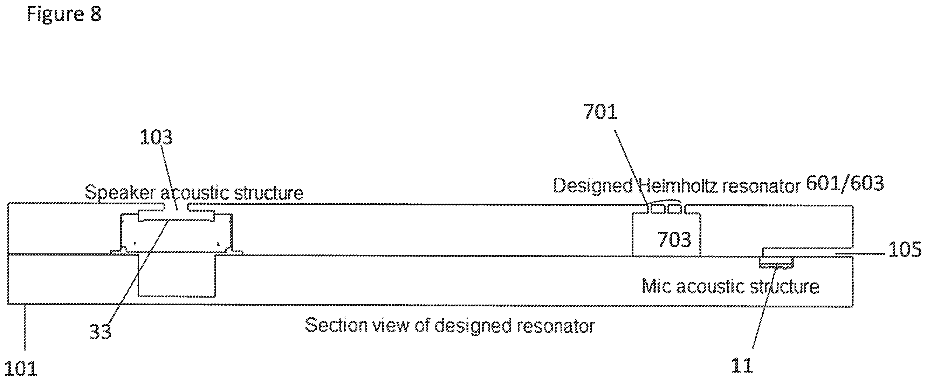

With respect to Figure 8 an example cross-sectional view of the apparatus 10 as shown in Figure 7 is shown. The apparatus comprising the casing 101, the speaker acoustic structure comprising the speaker 33 and the speaker output hole 103 (located towards one end of the apparatus), and the microphone acoustic structure comprising the microphones 11 and the microphone input hole 105 (located at the opposite end of the apparatus) and a Helmholtz resonator 601/603 comprising a cavity 703 and a series of resonator holes or ports 701. In some embodiments the Helmholtz resonator has a volume V=0.3cc a depth d=0.8mm; a length l=1mm; a number of ports n=9; and is configured to resonate a frequency fr≈4000Hz. However any suitable Helmholtz resonator can be used.

The operation of locating a resonator or other acoustical dampener at the node or pole region is shown in Figure 6 by step 507.

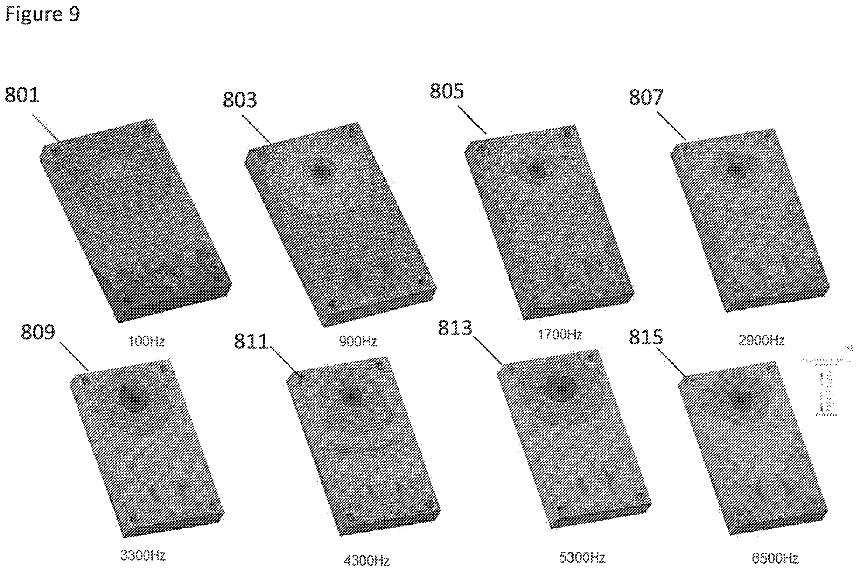

The significant reduction in acoustical coupling between the speaker and the microphone by using the acoustic dampener at the node or pole region is shown for example in Figure 9 which shows a sound pressure level distribution simulation similar to that shown in Figure 3 for the apparatus shown in Figure 7. The SPL distributions are shown for a frequency of 100Hz 801, 900Hz 803, 1700Hz 805, 2000Hz 807, 8300Hz 809, 4300Hz 811, 5300Hz 813, and 6500Hz 815 and show a significantly different SPL distribution to the example SPL distributions without the Helmholtz resonator.

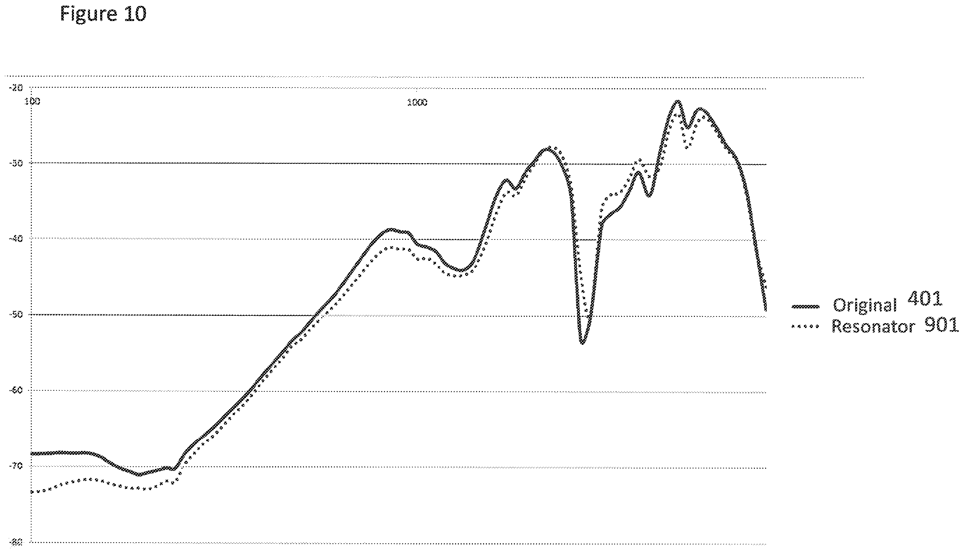

Furthermore with respect to Figure 10 an example free field acoustical coupling curve similar to Figure 5 is shown for the example Figure 7 showing the effect with and without the Helmholtz resonator. The two plots showing the original curve 401 and the resonator curve 901 show that the acoustical coupling is in general less following the introduction of the resonator.

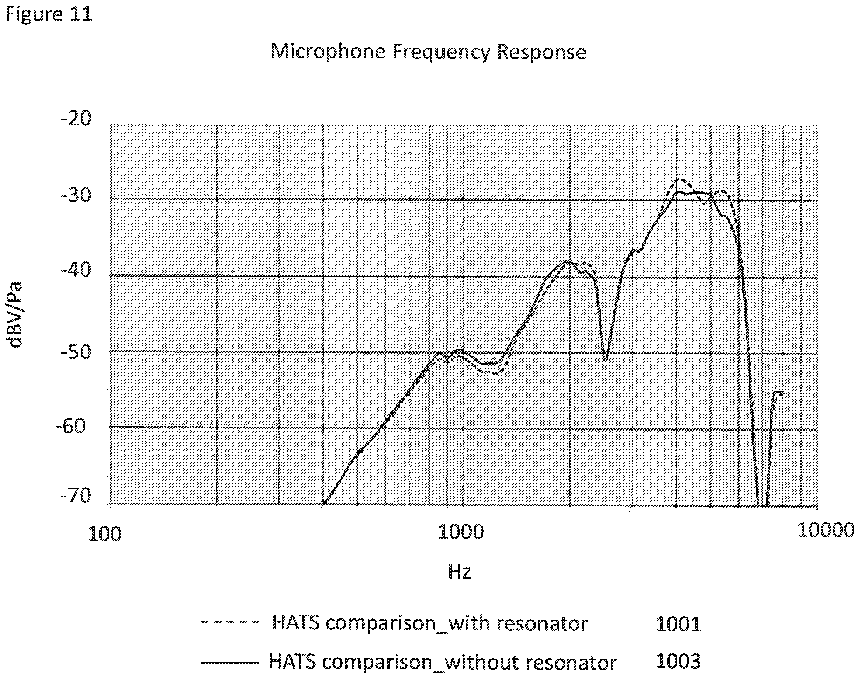

With respect to Figure 11 an example head and torso simulation (HATS) acoustic coupling curve is shown which shows that lower coupling is achieved in the main voice bands as can be seen by the head and torso simulation with the resonator 1001 compared to the head and torso simulation without the resonator 1003.

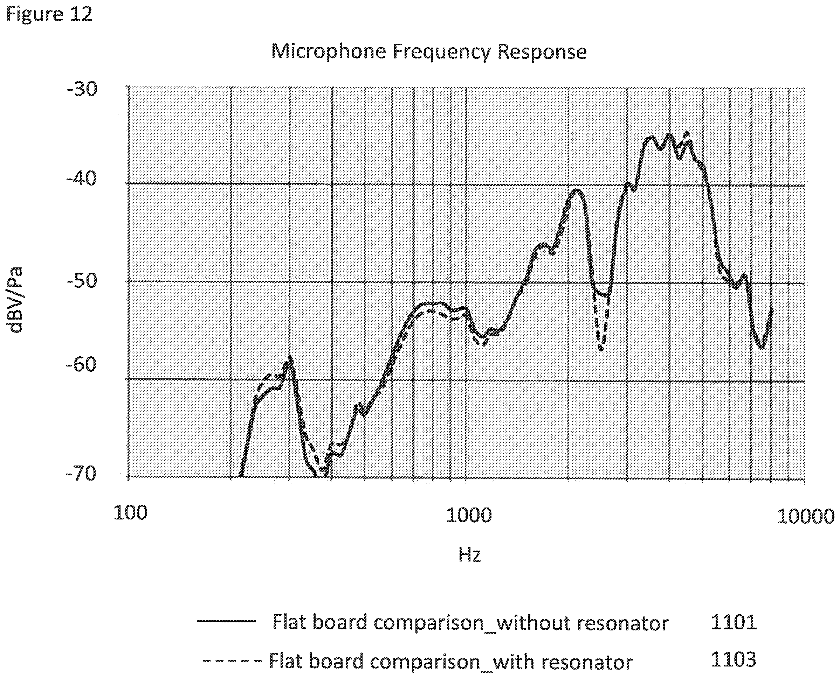

A similar flat surface comparison is shown in Figure 12 where the flat surface curves are shown without the resonator 1101 (such as shown in Figure 2) which has a higher acoustic coupling in general compared to the flat surface curve with the resonator (such as shown in Figure 7) 1103.

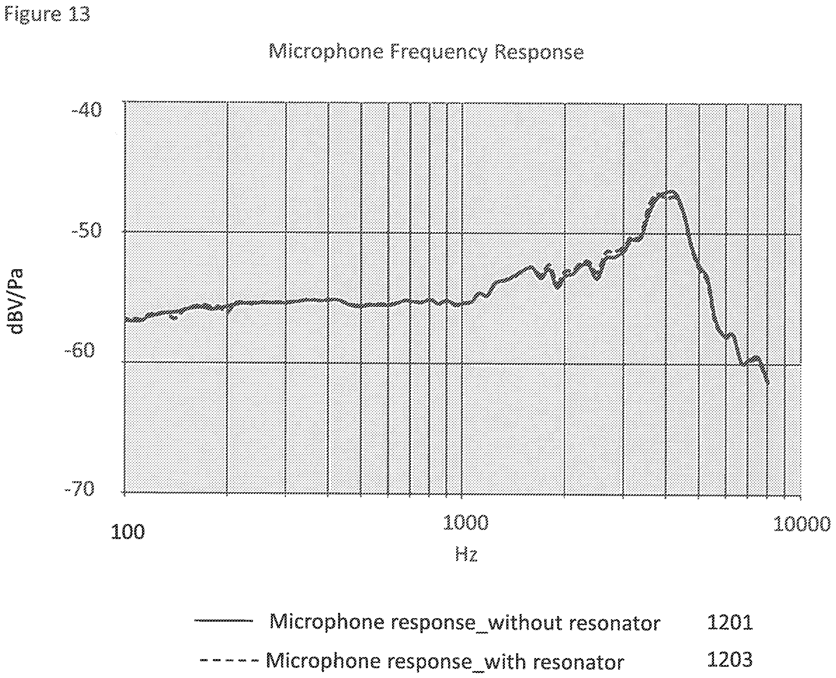

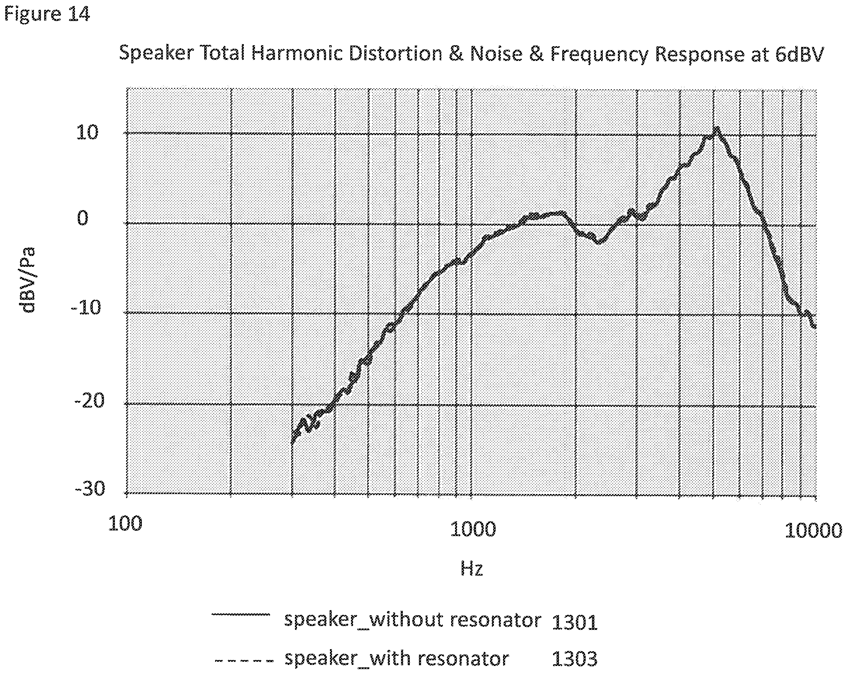

Furthermore the addition of the resonator does not significantly change the microphone response as shown in Figure 13 by the comparison of the microphone frequency responses with the resonator 1201 and the microphone frequency responses with the resonator 1203 and the speaker frequency response as shown in Figure 14 by the speaker frequency response without the resonator 1301 and the speaker frequency response with the resonator 1303. In both of the figures the curves are significantly similar and changes are largely due to the creeping wave modes on the surface changing because of surface impedance changes which determines the coupling from speaker to microphone.

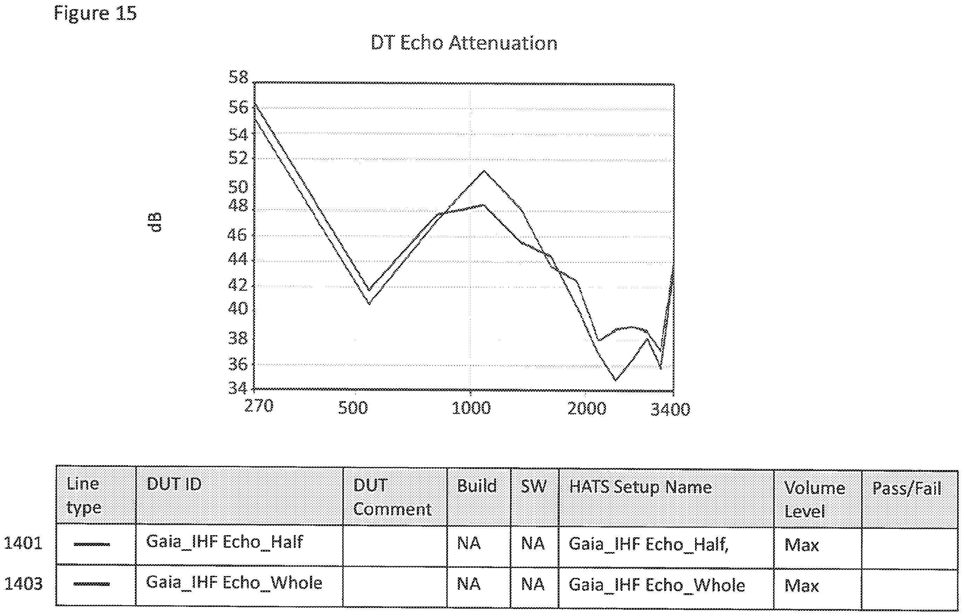

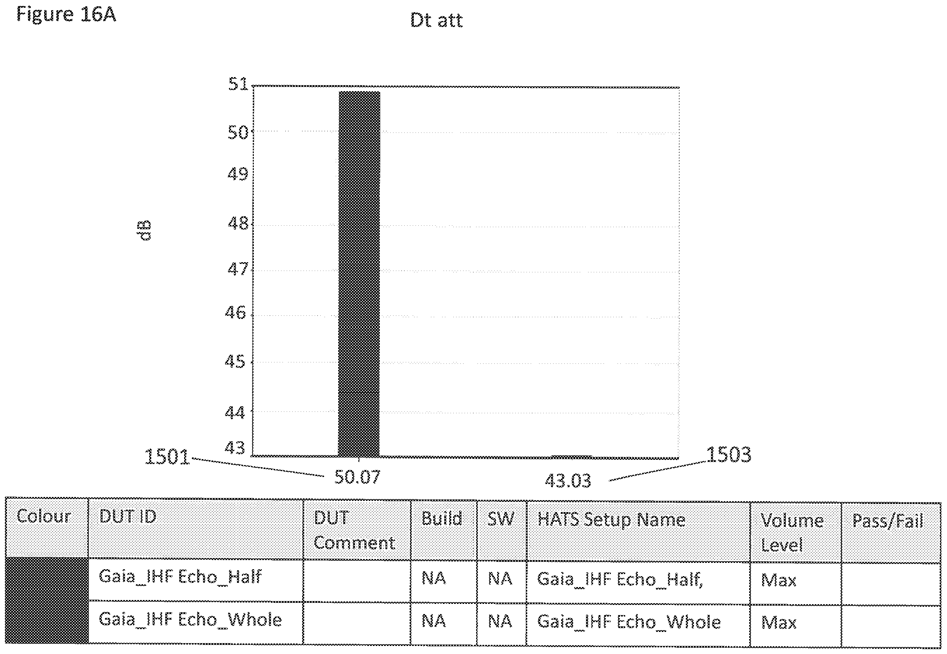

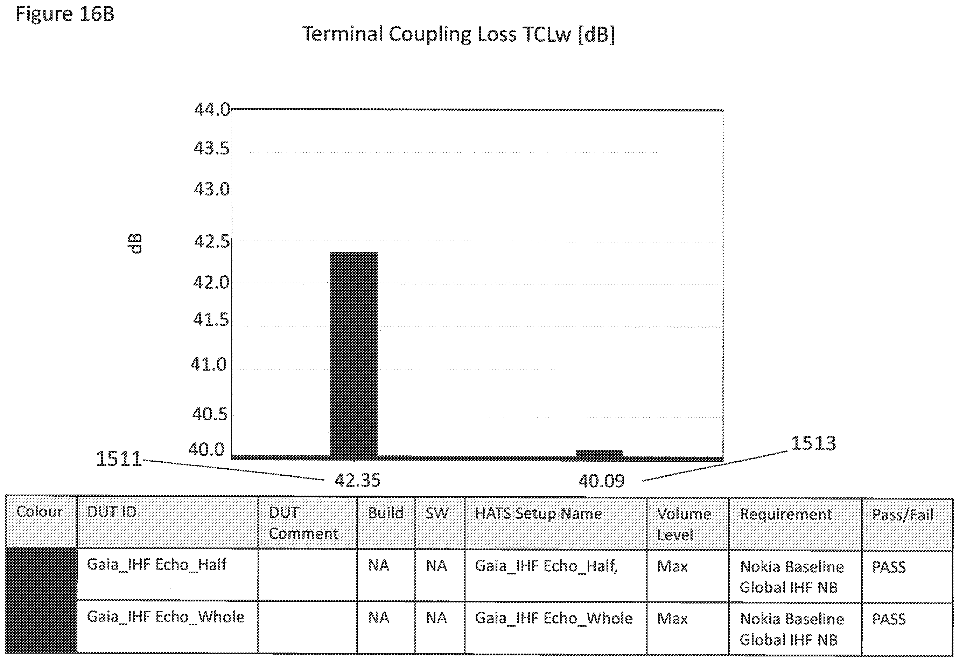

With respect to Figures 15 and 16A and 16B a further example mobile phone apparatus is shown. In such embodiments the mobile phone apparatus has extra holes in the back cavity and the examples shown herein show the coupling and echo performance without blocking the holes. Thus for example the mobile phone apparatus terminal coupling return loss test is shown in Figure 15 by the plots Echo half 1401 and Echo whole 1403. Furthermore the mobile phone apparatus echo and doubletalk performance without blocking the spare holes are shown in figure 16A wherein the Echo half 1501 plot shows significantly higher DT attenuation then the Echo whole plot 1503 and similarly the terminal coupling loss in the Echo half plot 1511 is much greater than the Echo whole plot 1513.

It shall be appreciated that the term user equipment is intended to cover any suitable type of wireless user equipment, such as mobile telephones, portable data processing devices or portable web browsers.

Furthermore elements of a public land mobile network (PLMN) may also comprise apparatus as described above.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus comprising:
at least one speaker (33); at least one microphone (11); and a casing (101) wherein an outlet (103) for the at least one speaker (33) couples the at least one speaker to an environment surrounding the apparatus and an inlet (105) for the at least one microphone (11) couples the environment to the at least one microphone within the apparatus are provided through the casing (101), wherein at least one acoustic coupling occurs due to the casing between the at least one speaker and the at least one microphone, the apparatus **characterised by**;
at least one location on the casing (101), determined based on the at least one acoustic coupling on a path between the at least one speaker and the at least one microphone wherein the at least one location based on the at least one acoustic coupling is a region where at least one of sound reflection and diffraction is concentrated when the at least one speaker generates sound;and
at least one resonator at the determined location so as to substantially reduce the at least one acoustic coupling between the at least one speaker and the at least one microphone.

2. The apparatus as claimed in claim 1, wherein the at last one acoustic coupling is determined from a sound pressure level distribution over the apparatus for at least one frequency range.

3. The apparatus as claimed in claim 2, wherein the determined sound pressure level distribution is determined from a boundary element model of the apparatus comprising the at least one speaker (33) and the at least one microphone (11).

4. The apparatus as claimed in claim 2, wherein the determined sound pressure level distribution is determined from a finite element model of the apparatus comprising the at least one speaker (33) and the at least one microphone (11).

5. The apparatus as claimed in any of claims 2 to 4, wherein the at least one frequency range is a frequency response from 100 Hz to approximately 10 kHz.

6. The apparatus as claimed in any preceding claim, wherein the at least one resonator is adapted to change surface impedance of the path between the at least one speaker and the at least one microphone.

7. The apparatus as claimed in any preceding claim, wherein the at least one resonator at the at least one location comprises a Helmholtz resonator (601, 603) at the at least one location.

8. The apparatus as claimed in claim 7, wherein the Helmholtz resonator (601, 603) is added on the path between the at least one speaker (33) and the at least one microphone (11) to absorb sound pressure level of the at least one acoustic coupling.

9. The apparatus as claimed in claim 7, wherein the Helmholtz resonator (601, 603) comprises a cavity and at least one hole.

10. The apparatus as claimed in any of claims 7 to 9, wherein the resonator at the defined location is adapted to reduce the at least one acoustic coupling.

11. The apparatus as claimed in any of claims 7 to 10, wherein the resonator is located based on a sound pressure level distribution determination of the apparatus over at least one frequency range.

12. The apparatus as claimed in any preceding claim is a portable electronic device.

## Patentansprüche

1. Vorrichtung, die Folgendes aufweist:
- mindestens einen Lautsprecher (33); mindestens ein Mikrofon (11); und ein Gehäuse (101),
wobei ein Ausgang (103) für den mindestens einen Lautsprecher (33), der den mindestens einen Lautsprecher mit der Umgebung der Vorrichtung koppelt, und ein Eingang (105) für das mindestens eine Mikrofon (11), der die Umgebung mit dem mindestens einen Mikrofon innerhalb der Vorrichtung koppelt, in dem Gehäuse (101) angebracht sind,
wobei mindestens eine akustische Kopplung aufgrund des Gehäuses zwischen dem mindestens einen Lautsprecher und dem mindestens einen Mikrofon erfolgt,
wobei die Vorrichtung **gekennzeichnet ist durch**:
- mindestens einen Ort am Gehäuse (101), der bestimmt wird, basierend auf der mindestens einen akustischen Kopplung auf einem Pfad zwischen dem mindestens einen Lautsprecher und dem mindestens einen Mikrofon, wobei der mindestens eine Ort, basierend auf der mindestens einen akustischen Kopplung, ein Bereich ist, in dem mindestens eine von Schallreflexionen und Beugungen konzentriert ist, wenn der mindestens eine Lautsprecher Schall erzeugt; und
- mindestens einen Resonator an dem bestimmten Ort, um die mindestens eine akustische Kopplung zwischen dem mindestens einen Lautsprecher und dem mindestens einen Mikrofon zumindest wesentlich zu reduzieren.

2. Vorrichtung nach Anspruch 1,
wobei die mindestens eine akustische Kopplung aus einer Schalldruckpegelverteilung über die Vorrichtung für mindestens einen Frequenzbereich bestimmt wird.

3. Vorrichtung nach Anspruch 2,
wobei die bestimmte Schalldruckpegelverteilung aus einem Randelementmodell der Vorrichtung bestimmt wird, das den mindestens einen Lautsprecher (33) und das mindestens eine Mikrofon (11) aufweist.

4. Vorrichtung nach Anspruch 2,
wobei die bestimmte Schalldruckpegelverteilung aus einem Finite-Elemente-Modell der Vorrichtung bestimmt wird, das den mindestens einen Lautsprecher (33) und das mindestens eine Mikrofon (11) aufweist.

5. Vorrichtung nach einem der Ansprüche 2 bis 4,
wobei der mindestens eine Frequenzbereich ein Frequenzgang von 100 Hz bis etwa 10 kHz ist.

6. Vorrichtung nach einem der vorhergehenden Ansprüche,
wobei der mindestens eine Resonator dazu ausgelegt ist, die Oberflächenimpedanz des Weges zwischen dem mindestens einen Lautsprecher und dem mindestens einen Mikrofon zu ändern.

7. Vorrichtung nach einem der vorhergehenden Ansprüche,
wobei der mindestens eine Resonator an dem mindestens einen Ort einen Helmholtz-Resonator (601, 603) an dem mindestens einen Ort aufweist.

8. Vorrichtung nach Anspruch 7,
wobei der Helmholtz-Resonator (601, 603) auf dem Weg zwischen dem mindestens einen Lautsprecher (33) und dem mindestens einen Mikrofon (11) hinzugefügt ist, um den Schalldruckpegel der mindestens einen akustischen Kopplung zu absorbieren.

9. Vorrichtung nach Anspruch 7,
wobei der Helmholtz-Resonator (601, 603) einen Hohlraum und mindestens eine Öffnung aufweist.

10. Vorrichtung nach einem der Ansprüche 7 bis 9,
wobei der Resonator an dem bestimmten Ort dazu ausgelegt ist, die mindestens eine akustische Kopplung zu reduzieren.

11. Vorrichtung nach einem der Ansprüche 7 bis 10,
wobei der Resonator basierend auf einer Bestimmung der Schalldruckpegelverteilung der Vorrichtung über mindestens einen Frequenzbereich ausgebildet ist.

12. Vorrichtung nach einem der vorhergehenden Ansprüche,
wobei die Vorrichtung eine tragbare elektronische Vorrichtung ist.

## Revendications

1. Équipement comprenant :
au moins une enceinte (33) ;
au moins un microphone (11) ;
et un boîtier (101) selon lequel une sortie (103) destinée à la au moins une enceinte (33), qui couple la au moins une enceinte à un environnement entourant l'équipement, et une entrée (105) pour le au moins un microphone (11), qui couple l'environnement au au moins un microphone à l'intérieur de l'équipement, sont prévus à travers le boîtier (101), selon lequel au moins un couplage acoustique a lieu du fait du boîtier entre la au moins une enceinte et le au moins un microphone, l'équipement étant **caractérisé en ce que** :
au moins un endroit sur le boîtier (101), calculé sur la base de ce que le au moins un couplage se trouve sur une trajectoire entre la au moins une enceinte et le au moins un microphone, selon lequel le au moins un endroit se base sur le fait que le au moins un couplage acoustique est une région dans laquelle est concentrée au moins un effet parmi une réflexion du son et une diffraction du son lorsque la au moins une enceinte génère du son ; et
au moins un résonateur est situé à l'endroit calculé de manière à réduire sensiblement le au moins un couplage acoustique entre la au moins une enceinte et le au moins un microphone.

2. Équipement selon la revendication 1, selon lequel le au moins un couplage acoustique est calculé à partir d'une distribution de niveau de pression sonore sur l'équipement pour au moins une gamme de fréquences.

3. Équipement selon la revendication 2, selon lequel la distribution calculée de niveau de pression sonore est calculée à partir d'un modèle à éléments frontaliers de l'équipement comprenant la au moins une enceinte (33) et le au moins un microphone (11).

4. Équipement selon la revendication 2, selon lequel la distribution calculée de niveau de pression sonore est calculée à partir d'un modèle à éléments finis de l'équipement comprenant la au moins une enceinte (33) et le au moins un microphone (11).

5. Équipement selon l'une quelconque des revendications 2 à 4, selon lequel la au moins une gamme de fréquences est une réponse en fréquences de 100 Hz à approximativement 10 kHz.

6. Équipement selon l'une quelconque des revendications précédentes, selon lequel le au moins un résonateur est adapté à changé l'impédance de surface de la trajectoire entre la au moins une enceinte et le au moins un microphone.

7. Équipement selon l'une quelconque des revendications précédentes, selon lequel le au moins un résonateur au niveau du au moins un endroit comprend un résonateur de Helmholtz (601,603) au niveau du au moins un endroit.

8. Équipement selon la revendication 7, selon lequel le résonateur de Helmholtz (601, 603) est ajouté dans la trajectoire entre la au moins une enceinte (33) et le au moins un microphone (11) afin d'absorber le niveau de pression sonore du au moins un couplage acoustique.

9. Équipement selon la revendication 7, selon lequel le résonateur de Helmholtz (601, 603) comprend une cavité et au moins un orifice.

10. Équipement selon l'une quelconque des revendications 7 à 9, selon lequel le résonateur au niveau de l'endroit défini est adapté à réduire le au moins un couplage acoustique.

11. Équipement selon l'une quelconque des revendications 7 à 10, selon lequel le résonateur se situe sur la base d'un calcul de distribution de niveau de pression sonore de l'équipement sur au moins une gamme de fréquences.

12. Équipement selon l'une quelconque des revendications précédentes, selon lequel l'équipement est un dispositif électronique portable.
